## Europäisches Patentamt

## European Patent Office

## Office européen des brevets

(19)

(11) Veröffentlichungsnummer: **0 200 937**
**B1**

(12) **EUROPÄISCHE PATENTSCHRIFT**

(45) Veröffentlichungstag der Patentschrift:
**27.12.89**

(51) Int. Cl.⁴: **B29C 51/20, B29C 51/08**

(21) Anmeldenummer: **86104759.5**

(22) Anmeldetag: **08.04.86**

(54) **Vorrichtung zur Herstellung von Kunststoff-Formteilen, insbesondere von Kunststoff-Hohlkörpern.**

(30) Priorität: **15.04.85 DE 3513388**

(43) Veröffentlichungstag der Anmeldung:
**17.12.86 Patentblatt 86/46**

(45) Bekanntmachung des Hinweises auf die Patenterteilung:
**27.12.89 Patentblatt 89/52**

(84) Benannte Vertragsstaaten:
**AT CH FR GB IT LI**

(56) Entgegenhaltungen:
**DE-A- 2 344 866**
**DE-A- 2 643 489**
**DE-A- 3 103 038**
**DE-B- 2 408 456**
**US-A- 3 135 998**

(73) Patentinhaber: **Schenk, Bernd, Dipl.-Ing., Eibenweg 7,
D-7517 Waldbronn(DE)**

(72) Erfinder: **Schenk, Bernd, Dipl.-Ing., Eibenweg 7,
D-7517 Waldbronn(DE)**

(74) Vertreter: **Zahn, Roland, Dipl.-Ing., Im Speitel 102,
D-7500 Karlsruhe 41(DE)**

ACTORUM AG

## Beschreibung

Die vorliegende Erfindung bezieht sich auf einen Schließ- und Haltemechanismus für die Formhälften einer Kunststoff-Formmaschine nach dem Oberbegriff des Patentanspruchs 1.

Eine derartige Schließ- und Halteeinrichtung ist, von den technischen Mitteln und verfahrensmäßigen Einzelschritten her betrachtet, aus der DE-OS 3 103 038 bekannt. Bei der hieraus bekannten Vorrichtung zur Herstellung von Kunststoff-Hohlkörpern, wie z.B. Surfbrettern, werden jedoch die separaten Kunststoffplatten im Abstand voneinander zu Halbschalen verformt und anschließend zusammengefahren und unter Druck miteinander verschweißt. Mit der bekannten Vorrichtung ist ein kontinuierlicher Fertigungsprozeß nicht möglich, insbesondere wegen der Folge der Verfahrensschritte (Einschieben der Kunststoffplatten, Auseinanderfahren, Einfahren der Heizung, Ausformung der Halbschalen, Ausfahren der Heizung, Zusammenfahren der Halbschalen, Verschweißen, Entnehmen des Produkts).

Nach dem Stand der Technik werden die Formhälften von Vorrichtungen zur Herstellung von Kunststoff-Formteilen über verschiedene mechanische Vorrichtungen aufeinander zubewegt. Insbesondere kommen hierbei solche Mechanismen zur Anwendung, die sowohl eine hohe Verfahrgeschwindigkeit als auch hohe Schließkräfte zulassen. Vornehmlich werden zur Lösung dieser Aufgabe hydraulisch angetriebene Mechaniken verwendet. Am weitesten verbreitet sind sowohl Kniehebelsysteme verschiedener Bauart als auch direkt wirkende, mehrstufige Hydraulikzylinder.

Bei kleineren Maschinen trifft man auch Lösungen, die auf indirekten pneumatischen Antrieben oder auch auf elektrischen Motoren mit Getrieben beruhen.

Das Funktionsprinzip aller dieser Lösungen ist weitgehend identisch und zeigt folgenden Ablauf:

– aus voll geöffneter Position fährt eine/oder fahren beide Formhälften mit hoher Geschwindigkeit in eine Halteposition (bei der Vakuumverformung) oder in die erste Schließposition.

– Nach einer Haltezeit oder einer Umschaltung schließen dann die Formhälften vollständig, und meist mit geringer Geschwindigkeit, aber hoher Kraft.

– Der Antrieb schaltet nach mechanischer Verriegelung der Formhälften ab und der Füll- und Formvorgang beginnt.

– Nach dem Ende des Formvorgangs erfolgt die Ausformung, nachdem zuvor mit hoher Geschwindigkeit die Formhälften geöffnet wurden.

Beim Fertigen von Kunststoff-Formteilen, insbesondere auch von Kunststoff-Hohlkörpern, die aus zwei zwischen den Formhälften miteinander verschweißten Behälterhälften bestehen, verändert sich aufgrund materialspezifischer Schrumpfungsprozesse die Materialdicke zwischen den Formhälften. Dies bedeutet, daß die auf die Kunststoff-Formteile, insbesondere auf die Schweiß- und Quetschnaht der genannten Behälterhälften, einwirkende Schließ- bzw. Haltekraft der Formhälften nicht konstant erhalten ist. Bezogen auf die Herstellung von Kunststoff-Hohlkörpern bedeutet dies, daß unter Umständen die notwendige Verschweißungskraft für eine ringsum dichte Schweißnaht nicht ausreicht oder aber, daß bei Überdünnisierung der Schließkraft die Schweiß- oder Quetschkanten beschädigt werden.

Die der vorliegenden Erfindung zugrunde liegende Aufgabe besteht darin, einen Schließ- und Haltemechanismus der gattungsgemäßen Art anzugeben, bei dem während des eigentlichen Produktionsschrittes, also z.B. während des Füll- bzw. Formvorganges und des Verschweißens bei der Herstellung der Kunststoff-Hohlkörper, die Halte- bzw. Schließkraft zwischen den Formhälften konstant erhalten bleibt, ohne daß dazu eine hohe Motorleistung erforderlich ist.

Diese Aufgabe wird durch die im kennzeichnenden Teil des Patentanspruchs 1 definierten Merkmale gelöst. Weiterbildungen dieser Erfindung sind in den Ansprüchen 2 und 3 definiert. Gemäß Anspruch 4 soll auch die Verwendung in Verbindung mit der sonstigen Ur-Formtechnik, insbesondere der Technik des Druck- und Spritzgießens sowie Spritzprägens, geschützt werden.

Mit der erfindungsgemäßen Vorrichtung wird erreicht, daß beim Zusammenfahren über die Druckfedern ein elastischer Formschluß möglich ist.

Durch die Abfederung der Formplatten wird die Anwendung sogenannter Servomotoren möglich, die eine hohe kurzzeitige Überlastung – bei anschließender Erholungszeit – zulassen. Dies geschieht in der Weise, daß unter Ausnutzung des Schwungmoments der Antriebsmotor in die abgefederte Schließposition fährt und nur bis zum vollständigen Einfallen der Haltebremse unter Last eingeschaltet bleibt.

Die Erfindung wird im folgenden anhand der Zeichnungen erläutert.

Fig. 1 zeigt eine Vorrichtung zur Herstellung von Kunststoff-Hohlkörpern mit geöffneten Formhälften;

Fig. 2 zeigt eine Vorrichtung nach Fig. 1 mit geschlossenen Formhälften.

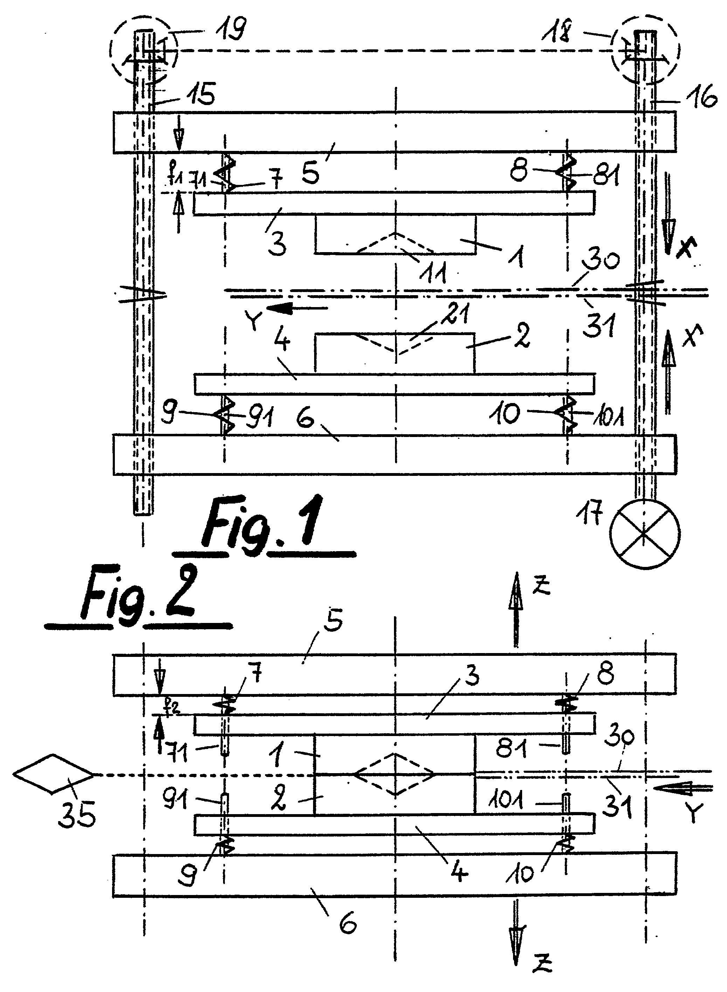

In Fig. 1 sind zwei koaxial zueinander ausgerichtete Formhälften 1, 2 dargestellt, die in einem definierten Abstand zueinander in ihrer Ruhelage gehalten werden. In beiden Formhälften 1, 2 ist je eine Kavität 11, 21 gestrichelt angedeutet; an diese Kavitäten 11, 21 wird während des eigentlichen Form- bzw. Herstellungsvorgangs Vakuum angelegt, womit sich dann die eingespannte Kunststoff-Folie an die Wandungen der Kavitäten 11, 21 anlegt.

Die Formhälften 1, 2 sind mit Halteplatten 3, 4 fest verbunden, deren Außenabmessungen größer sind als die Außenabmessungen der Formhälften 1, 2. Im Randbereich dieser Halteplatten 3, 4 sind diese an Quertraversen 5, 6 aufgehängt, über die letztlich das Zusammenfahren der Formhälften 1, 2 erreicht wird.

Die genannte Aufhängung der Halteplatten 3, 4 an den Quertraversen 5, 6 ist erfindungsgemäß so ausgebildet, daß Kraftspeicher (Druckfedern) 7, 8, 9, 10 vorgesehen sind. Mit diesen Kraftspeichern 7–10 werden die Halteplatten 3, 4 mit den Formhälften 1, 2 im vorgegebenen Abstand f 1 zu den Quertraversen 5, 6 gehalten. Die Kraftspeicher 7–10 werden axial über in die Quertraverse 5, 6 eingesetzte Stehbolzen 71, 81, 91, 101 geführt, die mit ihrem freien Ende in komplementäre Bohrungen in den Halteplatten 3, 4 eindringen können.

Die vorerwähnte Relativbewegung der Quertraversen 5, 6 zueinander wird über Gewindespindeln 15, 16 vermittelt, die über einen mit einer Bremse versehenen Elektromotor 17 und zwei Kegelradgetriebe 18, 19 bewegt werden. Die beiden Gewindespindeln 15, 16 sind so ausgebildet, daß sie je zur Hälfte links- bzw. rechtsgängig sind. Bei entsprechender Zuordnung bzw. Ausgestaltung der Spindeldurchgänge in den Quertraversen 5, 6 läßt sich somit erreichen, daß die Drehung der Gewindespindeln 15, 16 nach einer Richtung eine gleichsinnige Bewegung der Quertraversen 5, 6 voneinander weg oder aufeinander zu (Pfeil X) verursacht. Elektromotor 17, Gewindespindeln 15, 16 und Kegelradgetriebe 18, 19 sind so aufeinander abgestimmt, daß sie bei entsprechender Anpassung der Gewindespindelaufnahmen in den Quertraversen 5, 6 ein Schließen und Öffnen der aus den Formhälften 1, 2 bestehenden Form initiieren können.

Der Vollständigkeit halber ist in Fig. 1 noch ein Folienband-Paar 30, 31 eingezeichnet, das – auf die Zeichnung bezogen – von rechts kommend zwischen die Form geschoben und/oder gezogen wird (Pfeil Y).

Fig. 2 zeigt die Vorrichtung nach Fig. 1 bei geschlossener Form, d.h. eingespannten Folienbändern 30, 31.

Über den Elektromotor 17 werden die Quertraversen 5, 6 zusammengefahren (entsprechend Pfeil X aus Fig. 1) und zwar so weit, bis die Formhälften 1, 2 in geringem Abstand zueinander stehen. In dieser Position werden durch Anlegen von Vakuum die Hohlkörperhälften ausgebildet, indem aus den gespannten Folienbändern Halbschalen ausgeformt werden. An den Rändern der Halbschalen sind Schweißnaht-Profile vorgesehen, die in der nächsten Folge des Ausformvorganges jeweils miteinander verbunden werden.

Um die zur Verschweißung hohe, gleichmäßig verteilte Kraft am Hohlkörperrand aufzubringen, fahren die Formplatten mit hoher Geschwindigkeit aus der Halteposition heraus in die abgefederte Schließposition, bis die Kraftspeicher 7, 8, 9, 10 auf eine Länge f 2 komprimiert sind. Diese Länge f 2 entspricht gleichzeitig dem Abstand zwischen den Halteplatten 3, 4 und den Quertraversen 5, 6 bei geschlossener Form. Die Folienbänder 30, 31 sind nun zwischen den Formhälften eingespannt, und der Elektromotor kann abgeschaltet werden, da die Gewindespindeln 15, 16 über elektromagnetische Bremsmittel festgehalten werden. Die Formhälften 1, 2 sind an den Halteplatten 3, 4 quasi kardanisch aufgehängt; sie liegen elastisch aneinander an.

Ist die Form geschlossen, so wird der Kunststoff-Hohlkörper in den Kavitäten 11, 12 der Formhälften 1, 2 ausgeformt, wobei gleichzeitig dieser Kunststoff-Hohlkörper längs der Außenkanten der Kavitäten 11, 12 miteinander verschweißt wird. Längs der Schweißnaht auftretende Dickenunterschiede aufgrund von Materialschrumpfungen (die im Bereich von Zehnteln mm liegen können) werden nun aufgrund der quasi elastischen Pressung zwischen den Formhälften 1, 2 automatisch ausgeglichen. Nach Beendigung des Arbeitstaktes wird die Form wieder auseinandergefahren (Pfeil Z), und ein fertiger Kunststoffhohlkörper 35 wird ausgestoßen (Pfeil Y).

## Patentansprüche

1. Schließ- und Haltemechanismus für zwei Formhälften einer Vorrichtung zur Herstellung von Kunststoff-Formteilen, insbesondere zur Anwendung bei einer Vorrichtung zur Herstellung von Kunststoff-Hohlkörpern, bei der zwei parallel zueinander ausgestoßene Folienbänder oder ein Folienschlauch aus thermoplastischem Kunststoff einer Tiefziehform zugeführt und zu je einer Behälterhälfte verformt werden, wobei diese Behälterhälften in der geschlossenen Tiefziehform miteinander verbunden, insbesondere verschweißt, und als fertige Kunststoffbehälter der Tiefziehform entnommen werden, dadurch gekennzeichnet, daß die Formhälften (1, 2) über je eine Mehrzahl von Kraftspeichern (7, 8, 9, 10) an Haltetraversen (Quertraversen 5, 6) aufgehängt sind, und daß die Kraftspeicher (7, 8, 9, 10) nach dem Zusammenfahren der Formhälften (1, 2) derart vorgespannt sind, daß nach einem definierten Stillsetzen des Antriebs (Elektromotor 17) der Haltetraversen (Quertraversen 5, 6) diese Formhälften (1, 2) ausschließlich mittels der Kraftspeicher (7, 8, 9, 10) gegeneinander gedrückt werden, wodurch beim Verbinden der Behälterhälften entstehende Maßabweichungen bezüglich des Abstandes der Formhälften (1, 2) automatisch ausgeglichen werden.

2. Schließ- und Haltemechanismus nach Anspruch 1, dadurch gekennzeichnet, daß die Haltetraversen (Quertraversen 5, 6) der Formhälften (1, 2) durch einen hochüberlastbaren Elektromotor (17) mit einem kraftspeichernden Element und einer Bremse gebildet sind, wobei unter Ausnutzung kurzzeitiger Spitzenlasten sowohl größere Wege bei hoher Fahrgeschwindigkeit als auch hohe Zuhaltekräfte realisierbar sind.

3. Schließ- und Haltemechanismus nach Anspruch 1, dadurch gekennzeichnet, daß die Kraftspeicher (7, 8, 9, 10) Druckfedern und/oder Gasfedern sind.

4. Schließ- und Haltemechanismus nach Anspruch 1, gekennzeichnet durch seine Anwendung in der Ur-Formtechnik, insbesondere beim Druckgießen, Spritzgießen und Spritzprägen.

## Claims

1. A closing and holding mechanism for two mould halves of a device for the manufacture of plasics moulded parts, particularly for use with a device for the manufacture of plastics hollow parts, with which device two parallely manufactured sheeting strips or a sheeting tubing made out of thermoplastic plastic are conveyed to a deep-drawing mould and are each shaped into half a vessel, these vessel halves being joined together, particularly by welding, in the closed deep-drawing mould and being removed from the deep-drawing mould as a finished vessel made of plastics, characterized in that the mould halves (1, 2) are each suspended on holding girders (longitudinal girders 5, 6) via a plurality of energy storage means (7, 8, 9, 10), and in that after the mould halves (1, 2) have been brought together the energy storage means (7, 8, 9, 10) are prestressed in such a manner that after a defined shutdown of the drive (electric motor 17), for the holding girders (longitudinal girders 5, 6) these mould halves are pressed against each other solely by the energy storage means (7, 8, 9, 10), by which means dimensional discrepancies relating to the spacing of the mould halves (1, 2) and resulting during the joining of the vessel halves can be automatically balanced out.

2. A closing and holding mechanism in accordance with Claim 1, characterized in that the holding girders (longitudinal girders 5, 6) of the mould halves (1, 2) are formed by a heavily overloaded electric motor (17) with an energy storing element and a brake, both relatively great displacement at a high travelling speed and high locking forces being able to be achieved when temporary peak loads are used.

3. A closing and holding mechanism in accordance with Claim 1, characterized in that the energy storage means (7, 8, 9, 10) are compression springs and/or gas springs.

4. A closing and holding mechanism in accordance with Claim 1, characterized by its use in basic moulding technology, particularly with die casting, injection moulding, injection stamping.

**Revendications**

1. Mécanisme de fermeture et d'arrêt pour deux demi-moules d'un dispositif destiné à fabriquer des pièces moulées en matière plastique, notamment en vue de l'application à un dispositif pour fabriquer des corps creux en matière plastique, dans lequel deux rubans de film expulsés parallèlement l'un à l'autre, ou bien un flexible en un film d'une matière thermoplastique, sont dirigés vers un moule d'emboutissage profond et sont amenés à la forme d'une moitié respective de récipient, dans lequel ces moitiés de récipients sont reliées, notamment soudées l'une à l'autre dans le moule d'emboutissage profond fermé, puis sont prélevées de ce moule d'emboutissage profond en tant que récipients en matière plastique achevés, caractérisé par le fait que les demi-moules (1, 2) sont suspendus à des traverses de retenue (traverses d'entretoisement 5, 6) par l'intermédiaire de multiples accumulateurs de forces respectifs (7, 8, 9, 10); et par le fait que, après le regroupement des demi-moules (1, 2), les accumulateurs de forces (7, 8, 9, 10) sont soumis à une précharge telle que, après une mise à l'arrêt bien définie de l'entraînement (moteur électrique 17) des traverses de retenue (traverses d'entretoisement 5, 6), ces demi-moules (1, 2) soient poussés l'un contre l'autre exclusivement au moyen des accumulateurs de forces (7, 8, 9, 10), ce qui implique une compensation automatique d'écarts dimensionnels provoqués, lors de la solidarisation des moitiés de récipients, quant à la distance mutuelle des demi-moules (1, 2).

2. Mécanisme de fermeture et d'arrêt selon la revendication 1, caractérisé par le fait que les traverses de retenue (traverses d'entretoisement 5, 6) des demi-moules (1, 2) sont déplacées par un moteur électrique (17) pouvant être soumis à une forte surcharge, associé à un élément accumulateur de forces et à un frein, l'exploitation de brèves charges maximales permettant alors d'obtenir aussi bien de plus longues courses à une grande vitesse de déplacement, que de grandes forces de retenue.

3. Mécanisme de fermeture et d'arrêt selon la revendication 1, caractérisé par le fait que les accumulateurs de forces (7, 8, 9, 10) sont des ressorts de pression et/ou des ressorts à gaz.

4. Mécanisme de fermeture et d'arrêt selon la revendication 1, caractérisé par son utilisation dans les techniques de moulage primitives, en particulier lors du coulage sous pression, du coulage par injection, du matriçage par injection.

EP 0 200 937 B1

**Fig.1**

**Fig.2**